Europäisches Patentamt

European Patent Office

Office européen des brevets

(19)

(11) Veröffentlichungsnummer: **0 531 378 B1**

# (12) EUROPÄISCHE PATENTSCHRIFT

(45) Veröffentlichungstag der Patentschrift: **14.12.94**

(21) Anmeldenummer: **91910015.6**

(22) Anmeldetag: **28.05.91**

(86) Internationale Anmeldenummer:
**PCT/EP91/00986**

(87) Internationale Veröffentlichungsnummer:
**WO 91/18846 (12.12.91 91/28)**

(51) Int. Cl.5: **C04B 35/65**, C04B 35/18,
C04B 35/10

(54) **REAKTIONSGEBUNDENER MULLIT-HALTIGER KERAMIKFORMKÖRPER, SEINE HERSTELLUNG UND SEINE VERWENDUNG.**

(30) Priorität: **29.05.90 DE 4017262**
**11.12.90 DE 4039530**

(43) Veröffentlichungstag der Anmeldung:
**17.03.93 Patentblatt 93/11**

(45) Bekanntmachung des Hinweises auf die Patenterteilung:
**14.12.94 Patentblatt 94/50**

(84) Benannte Vertragsstaaten:
**DE FR GB IT SE**

(56) Entgegenhaltungen:
EP-A- 0 164 028          EP-A- 0 234 704
WO-A-89/09755          WO-A-90/01472
DE-A- 2 920 795          DE-A- 3 318 168

(73) Patentinhaber: **CLAUSSEN, Nils**
**Auf den Schwarzen Bergen 15**
**D-21224 Rosengarten (DE)**

(72) Erfinder: **CLAUSSEN, Nils**
**Auf den Schwarzen Bergen 15**
**D-21224 Rosengarten (DE)**

(74) Vertreter: **Huber, Bernhard, Dipl.-Chem. et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08**
**20**
**D-81635 München (DE)**

**Beschreibung**

Ein- und mehrphasige Formkörper mit keramischer Matrix werden zunehmend als temperatur- und verschleißfeste Komponenten im Maschinen- und Apparatebau eingesetzt. Solche Körper werden entweder über klassische keramische (d.h. pulvermetallurgische) Verfahren durch Pressen und Sintern hergestellt, oder sie werden durch Reaktion metallischer Prekursoren mit einer gasförmigen oder flüssigen Phase erzeugt (siehe z.B. "Reaction-Formed Ceramics", Am. Ceram. Soc. Bull., 67 (1988) 356). Diese sogenannten reaktionsgebundenen Keramiken beschränken sich bisher fast ausschließlich auf $Si_3N_4$ (RBSN) und SiC (RBSC). Eine weitere Möglichkeit, insbesondere mehrphasige Keramiken herzustellen, ist die Infiltration eines porösen keramischen Körpers mit einer metallischen oder keramischen Phase (s. z.B. Melt Infiltration Approach to Ceramic Composites", J. Am. Ceram. Soc. 71 (1988) C-96). In einem weiteren neuartigen Verfahren wird ein poröser keramischer Körper von einer keramischen Phase durchwachsen, die durch Reaktion eines Gases mit einer metallischen Schmelze entsteht, die einen ein- oder mehrseitigen Zugang zu dem porösen keramischen Vorkörper besitzt (s. z.B. "Formation of Lanxide Ceramic Composite Materials", J. Mater. Res. 1 (1986) 81 DIMOX-Prozeß).

All diese Keramikklassen und ihre Herstellungsverfahren haben charakteristische Nachteile. Der entscheidende Nachteil klassisch hergestellter Keramiken bzw. keramischer Verbundwerkstoffe liegt in der hohen linearen Schrumpfung, die zwischen dem Grünkörper und dem Endprodukt auftritt; sie beträgt üblicherweise 15 bis 25 %. Diese typische Schrumpfung macht die Form- und Maßhaltigkeit eines Formteils problematisch, sie führt zu Rißbildung und anderen qualitätsmindernden Fehlern.

Die Schrumpfung einer keramischen Matrix wirkt sich besonders auch bei der Einlagerung von Verstärkungselementen wie Fasern, Plättchen und Whiskern oder anderen, nicht mitschrumpfenden Komponenten nachteilig auf den Gefügezusammenhalt aus. Die infolge der Schrumpfdifferenzen auftretenden hohen Spannungen führen fast immer zu schädlichen Rissen. Ein weiterer charakteristischer Nachteil besonders der klassisch hergestellten Oxidkeramiken liegt in der Bildung einer glasförmigen intergranularen Phase, die zwar den Sinter- bzw. Verdichtungsprozeß beschleunigt, die mechanischen Hochtemperatureigenschaften aber stark beeinträchtigt.

Reaktionsgebundene Keramiken, vor allem $Si_3N_4$ (RBSN) und SiC und auch über den DIMOX-Prozeß hergestellte Keramiken (u.a. $Al_2O_3$ und AlN) weisen zwar keine oder nur eine geringe Schrumpfung auf, der Herstellungsablauf wird aber durch die oft wochenlangen Reaktionszeiten empfindlich beeinträchtigt. Ein weiterer Nachteil der RBSN-artigen Keramiken liegt in der Tatsache, daß nur Körper mit selten mehr als 85 % der theoretischen Dichte erzielt werden können, was auf die mit abnehmender Porosität immer mehr reduzierte Stickstoffdiffusion zurückzuführen ist.

Eine solche geringe Dichte hat erfahrungsgemäß schlechte mechanische Eigenschaften zur Folge (s.a. "Review: Reaction-Bonded Silicon Nitride: its Formation and Properties", J. Marter. Sci., 14 (1979) 1017). Die Herstellung von keramischen Verbundwerkstoffen auf $Al_2O_3$- und AlN-Basis durch Schmelzreaktion und damit verbundene Durchwachsung eines porösen keramischen Vorkörpers ist u.a. in den kürzlich offengelegten europäischen Patentanmeldungen 0155831, 0169067, 0193292 und 0234704 beschrieben. Auch hierbei läuft die Reaktion sehr langsam ab. Außerdem ist eine Dimensionskontrolle der Körper mit großem Aufwand verbunden.

Aufgrund ihrer feindispersen Porosität, ihrer guten Korrosionsbeständigkeit und ihrer guten Temperaturschockbeständigkeit, kommt Mullit-Keramiken eine große Bedeutung für Anwendungen bei hohen Temperaturen und unter korrosiven Bedingungen zu. Diese Keramiken besitzen aber entscheidende Nachteile, weil sie zur Erzielung ausreichender Dichten und Festigkeiten in der Regel bei hohen Temperaturen (> 1650 °C) gesintert werden müssen, infolge der $SiO_2$-Komponente intergranulare Glasphasen enthalten und meist Sinterschrumpfungen von > 15 % aufweisen (vgl. Ceramic Transactions, Band 6, "Mullite and Mullite Matrix Composites", Ed. S. Somiya, R. F. Davis, J. A. Pask, The American Ceramic Society, Inc., Westerville/Ohio, 1990).

Aufgabe der vorliegenden Erfindung ist es, reaktionsgebundene Mullit-haltige Keramikformköper bereitzustellen, die die vorstehend genannten Nachteile nicht aufweisen.

Diese Aufgabenstellung wird mit der vorliegenden Erfindung gelöst. Gegenstand der Erfindung ist ein reaktionsgebundener Mullit-haltiger Keramikformkörper, der dadurch gekennzeichnet ist, daß er praktisch keine amorphen intergranularen Phasen aufweist, aus 5 bis 100 Vol.-% Mullit, 0 bis 80 Vol.-% mindestens eines Oxids aus der Gruppe $Al_2O_3$, $ZrO_2$, Zirkon, Cordierit und $MgAl_2O_4$ besteht, wobei der Mullitgehalt durch Wärmebehandlung eines aus einer feindispersen Pulvermischung aus Aluminium, $Al_2O_3$ und einem Si-haltigen Material geformten Körpers in einer Sauerstoff-haltigen Atmosphäre durch Reaktion der Komponenten gebildet wird.

Aus der DE-A-3812266 ist ein pulvermetallurgisch erzeugter Keramikformkörper bekannt, der aus mindestens einer dispersen anorganischen Komponente, die in einer Phase aus Aluminiumoxid und/oder Aluminiumnitrid und/oder Aluminiumoxinitrid eingebettet ist, und der dadurch gekennzeichnet ist, daß er

a) eine Längenänderung um weniger als ± 10 % gegenüber dem Grünzustand aufweist,

b) eine Porosität von weniger als 15 % besitzt,

c) glasphasenfreie Korngrenzen besitzt und durch Sintern aus einem Grünkörper erhältlich ist, der neben der dispersen anorganischen Komponente mindestens 10 Vol.-% Aluminiumpulver, das eines oder mehrere der Legierungselemente Mg, Si, Zn, Pb, Na, Li, Se aufweisen kann, enthält, das nach der Sinterbehandlung teilweise oder vollständig zu $Al_2O_3$ und/oder AlN und/oder Aluminiumoxidnitrid reagiert ist, wobei die Morphologie der in ihm dispergierten anorganischen Komponente durch den Sinterprozeß nicht verändert wird.

Gemäß einer ersten Ausführungsform besteht die disperse anorganische Komponente des Keramikformkörpers überwiegend oder vollständig aus $Al_2O_3$ und/oder AlN in Form von pulver-, plättchen- oder/und nadelförmigen Teilchen. Gemäß einer weiteren bevorzugten Ausführungsform enthält die disperse Phase des Formkörpers Mullit, SiC, $B_4C$, TiC, $Si_3N_4$ oder Legierungen daraus in Form von Fasern, Whisker oder Plättchen, wobei die Gesamtmenge auf den Formkörper bezogen 5 bis 50 Vol.-% beträgt. Die disperse Phase kann hierbei allein aus den genannten Fasern, Whiskern oder Plättchen bestehen oder im Gemisch mit den vorstehend beschriebenen Teilchen aus $Al_2O_3$ und/oder AlN und gegebenenfalls $ZrO_2$ vorliegen. In einer weiteren bevorzugten Ausführungsform besteht die disperse anorganische Komponente aus Pulverteilchen aus einer oder mehreren der karbidischen Phasen SiC, $B_4C$, TiC, WC, TaC und/oder der nitridischen Phase $Si_3N_4$ und/oder der boridischen Phasen $ZrB_2$ und $TiB_2$ allein oder im Gemisch mit den oben erwähnten Teilchenformen von $Al_2O_3$ und/oder AlN. Durch geeignete Wahl des bei der Herstellung des Körpers angewendeten Preßdruckes und des Verhältnisses von $Al_2O_3$ zu metallischem Aluminium läßt sich die lineare Schrumpfung oder Ausdehnung auf weniger als 1 % gegenüber dem grünen Zustand vermindern.

Der Formkörper wird dadurch hergestellt, daß eine oder mehrere anorganische disperse Phasen, vorzugsweise $Al_2O_3$-Pulver, mit einem Aluminiumpulver vermischt, danach verpreßt und anschließend bei Temperaturen zwischen 900 und 1600°C an der Luft geglüht werden. Die metallische Phase verbindet dabei die $Al_2O_3$-Pulverteilchen (oder andere anorganische Partikel) unter gleichzeitiger Reaktion zu $Al_2O_3$. Die mit dieser Reaktion verbundene Volumenausdehnung füllt dabei die meisten der im Preßkörper vorhandenen Poren aus und kompensiert die durch Sintern verursachte Schrumpfung. Bei geeigneter Wahl von Preßdruck für den Grünkörper und Verhältnis von $Al_2O_3$ (oder anderer anorganischer Phasen oder Phasengemischen) zu Al-Pulver kann eine Volumenänderung zwischen Grün- und Fertigkörper völlig vermieden werden. Das Produkt kann analog zu reaktionsgebundenem $Si_3N_4$ als reaktionsgebundenes $Al_2O_3$ (RBAO) bezeichnet werden.

Die Bildung des Formkörpers ist überraschend, da reines Al-Pulver unter Preß- und Glühbedingungen entweder explosionsartig reagiert (bei extremer Al-Pulverfeinheit, d.h. < ca. 10 $\mu$m) oder aber hefekuchenartig aufschwillt, ohne einen Zusammenhang zwischen den entstehenden $Al_2O_3$-Partikeln zu bewirken. D.h., es war zu erwarten, daß kein fester Körper entsteht. Eine Pulverkombination aus $Al_2O_3$ mit reinem Al führt jedoch zu einem relativ festen, reaktionsgebundenen Körper. Die eingesetzte Pulverform von Al mit gegebenenfalls geringen Mengen an Mg-, Si- und Zn-Pulver zusammen mit mindestens 40 Vol.-% $Al_2O_3$-Pulver oder AlN ergibt noch dichtere und festere Formkörper. Zwar ist aus Arbeiten von W. Thiele (Aluminium, 38 (1962) 707, S. Balicki (Trace Inst. Hutn. 10 (1958) 208), H. Drouzy und C. Mascare (Metallurgical Reviews, 131 (1969 25), H. Richard und R. Emery (Fonderie 373 (1977) 389) und aus den zuvor erwähnten Lanxide-Anmeldungen (s. u.a. EP 0234704) bekannt, daß insbesondere Zusätze von Mg, Na, Se, Zn, Mn und Si die Oxidation von Al-Schmelzen beschleunigen, sie hätten aber um so mehr einen hefekuchenartig aufgeblähten Körper ergeben müssen. Auch wenn ZnO und MgO in Mengen zwischen etwa 0,1 und etwa 5 Gew.-% zugesetzt wurden, führte reines Al-Pulver zu festen Körpern. Besonders gegenüber den Produkten des Lanxide-Prozesses ist es überraschend, daß die metallische Phase vollständig zu $Al_2O_3$ oxidiert wird. Eine mögliche Erklärung liefert die hohe Dichte der im Formkörper vorhandenen Korngrenzen, die als Sauerstoffdiffusionswege zur Verfügung stehen. Eine weitere Überraschung, für die bisher keine Erklärung gefunden wurde, stellt die Tatsache dar, daß in dem Formkörper gemäß der DE-A-3812266 Korngrenzen ohne Glasphasen beobachtet werden konnten: dieses Phänomen läßt sich bei mindestens 30 % der untersuchten Korngrenzen beobachten.

Die Sinterung erfolgt vorzugsweise an der Luft bei Temperaturen zwischen 900 und 1550°C bei einem Gesamtdruck von 0.05 bis 0.3 MPa.

Die für die Herstellung des Grünkörpers eingesetzte Menge an Al-Pulver beträgt vorzugsweise 10 bis 50 Vol.-%, bezogen auf die Mischung mit der dispersen anorganischen Komponente. Wenn Al-Legierungspulver verwendet wird, kann dieses als solches mit den oben angegebenen Legierungsbestandteilen eingesetzt werden oder aus einer Mischung der Pulver von reinem Aluminium und den Legierungselementen oder den in situ unter den Sinterbedingungen die Legierung ausbildenden Verbindungen der Legierungselemente bestehen. Insbesondere kann in diesem Fall reines unlegiertes Al-Pulver zusammen mit Oxiden der Legierungselemente zugesetzt werden, wobei Magnesium in Form von MgO oder $MgAl_2O_4$, Si in Form von $SiO_2$ und Zn in Form von ZnO in Mengen, die zwischen 0.1 und 10 Gew.-%, vorzugsweise von 0.5 bis 20 Gew.-% des Legierungselements entsprechen, eingesetzt werden können. Demzufolge ist der bevorzugte Gehalt an metallischen Legierungselementen in den Al-Legierungen 0.5 bis 10 Gew.-% Mg und/oder Si und/oder Zn und/oder Pb und/oder Se und/oder Na und/oder Li. Das $Al_2O_3$-Pulver wird zweckmäßig mit einer Teilchengröße im Bereich von 1 bis 100 μm eingesetzt.

Die Ausgangskomponenten werden zweckmäßig in einer Kugelmühle, insbesondere einem Attritor, homogenisiert bzw. mechanisch legiert und das erhaltene Pulver dann zum Grünkörper verarbeitet. Der Grünkörper aus der Metall/Keramikpulvermischung kann durch Trockenpressen, Schlickergießen, Spritzgießen oder Extrudieren hergestellt werden. Das Vermahlen bzw. Attritieren erfolgt zweckmäßig in einem gegenüber den Komponenten inerten flüssigen Medium wie Aceton oder einem Alkohol wie Isopropanol.

Die Sinterstufe selbst wird in Sauerstoff- und Stickstoffhaltiger Atmosphäre bei einem Druck zwischen 0.05 und 10 MPa durchgeführt. Bevorzugt wird der Bereich zwischen 0,08 und 0.5 MPa, ganz besonderes bevorzugt der Bereich zwischen 0,09 und 0.11 MPa.

Gemäß einer besonderen Ausführungsform des Verfahrens wird nach der Sinterbehandlung noch eine heißisostatische Nachverdichtung in einem Druckübertragungsmedium aus Ar, $N_2$ oder einem Gemisch aus Ar und $O_2$ durchgeführt (HIP).

Zur Sinterbehandlung kann der Grünkörper üblicherweise mit einer Aufwärmphase auf die eigentliche Sintertemperatur aufgeheizt werden. Die Aufwärmphase kann jedoch auch weggelassen und der Grünkörper direkt in den heißen Ofen bei Temperaturen zwischen 900 und 1200°C eingeführt und bei dieser Temperatur bis zur mindest teilweisen Reaktion des Al-Pulvers gehalten und anschließend abgekühlt werden. Bevorzugt wird die Haltezeit so eingestellt, daß eine vollständige Umsetzung des AlPulvers stattfindet. Zu diesem Zweck wird der eigentlichen Glühbehandlung bei 900 bis 1200°C noch eine Nacherwärmung auf 1300 bis 1600°C angeschlossen, um eine Sinterung und gegebenenfalls eine vollständige Umsetzung des Aluminiums sicherzustellen.

Der Keramikformkörper gemäß der DE-A-3812266 kann als Matrix für die Einbettung von Whiskern, Fasern oder anderen Verstärkungsformen unterschiedlicher anorganischer Stoffe verwendet werden. In diesem Falle werden zweckmäßig 5 bis 50 Vol.-%, bezogen auf die Mischung von disperser anorganischer Komponente und Al-Pulver, an Fasern, Whisker oder Plättchen zugesetzt, die ihrerseits wiederum aus $Al_2O_3$, Mullit, $ZrO_2$, SiC, $B_4C$, TiC, $Si_3N_4$, AlN oder Legierungen dieser Substanzen bestehen können.

Außer der oben schon genannten bevorzugten anorganischen Komponente in Form von $Al_2O_3$ und AlN können als disperse anorganische Komponente auch Pulverteilchen aus einer oder mehreren der karbidischen Phasen SiC, $B_4C$, TiC, WC, TaC und/oder der nitridischen Phase $Si_3N_4$ und/oder der boridischen Phasen $ZrB_2$ oder $TiB_2$ eingesetzt werden. Eine weitere Verbesserung der physikalischen Eigenschaften des Formkörpers läßt sich durch Infiltration des fertigen Formkörpers mit flüssigem Aluminium erzielen. Hierbei werden die noch vorhandenen Poren durch das flüssige Aluminium gefüllt, so daß ein vollständig dichter Körper erzielt wird.

Es wurde nun gefunden, daß die erfindungsgemäßen Keramikformkörper gegenüber den vorstehend beschriebenen Formkörpern gemäß der DE-A-3812266 hohe Anteile an temperaturbeständigem Mullit enthalten und dazu noch praktisch frei von Glasphasen sind, was für mullithaltige Körper völlig ungewöhnlich ist. Es wurde weiterhin festgestellt, daß der immer vorhandene Abrieb von den $ZrO_2$-Mahlkugeln (3Y-TZP: 2 Mol-% $Y_2O_3$-haltiges $ZrO_2$) den Reaktionsprozeß maßgeblich beeinflußt. D.h. bei Verwendung von $Al_2O_3$-Mahlkugeln muß $ZrO_2$ in Mengen zwischen 2 und 10 Vol.-% zugesetzt werden.

Dadurch, daß das metallische Aluminium bei der Herstellung der erfindungsgemäßen Mullit-haltigen Keramikformkörper mit einem Silicium-haltigen Material, z.B. Si, SiC, $Si_3N_4$ oder $ZrSiO_4$, zusammen mit Anteilen von $Al_2O_3$ fein gemahlen, pulvermetallurgisch geformt und anschließend an Luft bei Temperaturen zwischen 700°C und 1300°C reaktionsgeglüht wird, wandelt sich das Si-haltige Material in reaktives $SiO_2$ um und reagiert zum Teil mit dem aus dem flüssigen Al entstandenen $Al_2O_3$ unter Bildung von Mullit gemäß der Gleichung:

$$3Al_2O_3 + 2SiO_2 \rightarrow 3Al_2O_3 \cdot 2SiO_2 \text{ (Mullit)}.$$

Diese Mullitbildung stellt zwar eine bekannte Reaktion dar, aber die Tatsache, daß nur wenig amorphe silikatische intergranulare Glasphasen auftreten, war völlig überraschend und ist noch ungeklärt. Möglicher-

4

weise hängt dies damit zusammen, daß infolge der Reduktion des $SiO_2$ durch flüssiges Al ein für die Mullit-bildung günstiger Übergangszustand entsteht. Bei einem sonst üblichen Einsatz von $SiO_2$ - und $Al_2O_3$-Pulver zur Reaktionssinterung von Mullit entstehen nämlich immer amorphe intergranulare Phasen; diese amorphen Phasen verschlechtern aber die Hochtemperatureigenschaften von Mullitkeramiken beträchtlich.

Die Reaktion Al → $Al_2O_3$, die der Herstellung der aus DE-A-3812266 bekannten Keramikformkörper zugrundeliegt, ist mit einer Volumenzunahme von 28 % verbunden; beim Übergang von SiC → $SiO_2$, der bei der Herstellung der erfindungsgemäßen Mullit-haltigen Keramikformköper auftritt, tritt eine Volumenzunahme von ca. 108 % auf. Besonders diese zweite Ausdehnungsreaktion trägt dazu bei, daß die bei der anschließenden Sinterung bei Temperaturen > 1300 °C auftretende Schrumpfung dann leichter kompensiert werden kann als nur auf der Basis der Volumenzunahme der Reaktion Al → $Al_2O_3$, wie sie dem Keramikformkörper gemäß der DE-A-3812266 zugrunde liegt. In dieser Sinterstufe reagiert dann das restliche $SiO_2$ mit $Al_2O_3$ ebenfalls zu Mullit. Aufgrund der bei der Reaktion entstehenden feinen Mullitkristalle ist es möglich, für die erfindungsgemäßen Mullitkeramiken geringere Sintertemperaturen von nur ca. 1300 °C bis ca. 1500 °C anzuwenden. Die dabei auftretenden sehr feinen Poren (< 1 $\mu$m) wirken sich auf die Festigkeit kaum noch aus. Die Porosität kann jedoch bei Temperaturen von > 1500 °C bis ca. 1700 °C noch weiter verringert werden. Besonders günstig für das Reaktions- und Sinterverhalten sowie für die mechanischen Eigenschaften der Keramikformkörper wirken sich Zusätze von $Al_2O_3$ und $ZrO_2$ bzw. $ZrSiO_4$ aus. Auch solche $Al_2O_3$- und $ZrO_2$-reiche, nach dem erfindungsgemäßen Verfahren erhältliche Mullitkeramiken weisen kaum Glasphasen auf (auch bei der Reaktion $ZrSiO_4$ + $Al_2O_3$ → Mullit + $ZrO_2$ handelt es sich um eine an sich bekannte Reaktion; vgl. z.B. J. Am. Cerm. Soc. 63 (1980), 228 und DE-A-2920795).

Die Ausgangskomponenten können erfindungsgemäß wie vorstehend für die Herstellung der Keramikformkörper gemäß der DE-A-3812266 angegeben in einer Kugelmühle, insbesondere einem Attritor, homogenisiert, bzw. mechanisch legiert und das erhaltene Pulver dann zum Grünkörper verarbeitet werden. Eine effektive Vermahlung des groben Al-Ausgangspulvers läßt sich zweckmäßigerweise besonders dadurch erzielen, daß mit groben SiC- und/oder $Al_2O_3$-Pulvern (3 bis 30 $\mu$m) attritiert wird, bis die gesamte Pulvermischung Teilchengrößen zwischen 0.1 und 3 $\mu$m erreicht hat. Um die Sinterung und Reaktion zu verbessern, kann ein Teil des $Al_2O_3$ aber auch in feindisperser Form (< 1 $\mu$m) zugesetzt werden. Die Si-haltige Komponente sollte möglichst in feiner (d.h. < 5 $\mu$m Durchmesser) Teilchenform zugesetzt werden. Wenn grobes $Al_2O_3$-Pulver als Mahlunterstützung verwendet wird, wirkt sich beispielsweise der Zusatz von SiC mit Pulverteilchen < 1 $\mu$m besonders vorteilhaft aus. Bei Verwendung von TZP-Mahlkugeln (tetragona-les $ZrO_2$) wird $ZrO_2$-Abrieb eingebracht, der sich auf den Prozeß besonders vorteilhaft auswirkt. Bei der Mahlung, beispielsweise in Aceton oder Isopropanol, bilden sich $Al_2O_3$-Häute um die feinen, von nanometergroßen Oxidpartikelchen durchsetzten, Al-Teilchen, so daß die Teilchen passiviert werden und damit eine gefahrlose Handhabung, d.h. Trocknung und weitere Bearbeitung der Pulvermischung an Luft oder in anderen oxidierenden Atmosphären erfolgen kann.

Gemäß einer Ausführungsform der Erfindung kann ein Teil des Aluminiums ersetzt werden durch eines oder mehrere der Metalle bzw. Metalloide aus der Gruppe Co, Cr, Ce, Fe, Mg, Mn, Nb, Ni, Ta, Ti, Zn, Zr, Si, Sic, $Si_3N_4$ und V. Dabei werden bis zum 50 % des ursprünglich als Pulver eingesetzten Al durch ein Metallpulver oder -gemisch aus dieser Gruppe ersetzt. Die nachfolgende Tabelle zeigt die bei der Oxidation dieser Metalle bzw. Metalloide ablaufenden Reaktionen und deren chemisch-physikalische Daten.

| Reaktion | Molekular-Gewichte | Dichte (g / cm³) | ΔV (%) | $T_{m-Metall}$ (°C) | $\Delta_f\, G°$ 1400 K/0.1 MPa [KJ/mol] |
|---|---|---|---|---|---|
| 2 Al + 3/2 O₂ → Al₂O₃ | 54/102 | 2.702, 3.97 | + 28 | 660 | -1217.5 -0 = -1217.5 |
| 2 Ca + O₂ → 2 CaO | 40/56 | 1.54, 3.25...38 | - 35 | 839 | 2 (-487.8)-0 = -975.6 |
| 2 Co + O₂ → 2 CoO | 59/ 75 | 8.9, 6.45 | + 75 | 1495 | 2 (-135.7)-0 = -271.4 |
| 2 Cr + 3/2 O₂ → Cr₂O₃ | 104/152 | 7.2, 5.21 | +102 | 1857 | -751 -0 = -751.0 |
| 2 Cu + O₂ → 2 CuO | 63.5/79.5 | 8.9, 6.0 | + 86 | 1085 | 2 (-33.2) -0 = -66.4 |
| 2 Fe + O₂ → 2 FeO | 56/ 72 | 7.9, 5.7 | + 77 | 1536 | 2 (-181.7)-0 = -363.4 |
| 2 Mg + O₂ → 2 MgO | 24.3/40.3 | 1.74, 3.6 | - 19 | 649 | 2 (-442.9)-0 = -885.8 |
| 2 Mn + O₂ → 2 MuO | 55/71 | 7.2, 5.0 | + 86 | 1244 | 2 (-282) = -564 |
| 2 Nb + 5/2 O₂ → Nb₂O₅ | 186/266 | 8.57, 4.47 | + 174 | 2468 | -- = -- |
| 2 Ni + O₂ → 2 NiO | 58.7/74.7 | 8.9, 6.7 | + 70 | 1453 | 2 (-115.2)-0 = -330.4 |
| Si + O₂ → SiO₂ | 28/60 | 2.33, 2.32 | +115 | 1412 | - 661.5 -0 = -661.5 |
| SiC + 2 O₂ → SiO₂+CO₂ | 40/60 | 3.22, 3.32 | +108 | - | - 661.5-396-(-62.2)= -995.3 |
| Si₃N₄ + 2 O₂ →3 SiO₂+4 NO₂ | 140/180 | 3.44, 2.32 | + 90 | - | 3 (-661.5)+4 (+121)-(-281.4) = -1219.1 |
| 2 Ta + 5/2 O₂ → Ta₂O₅ | 362/442 | 16.6, 8.2 | +147 | 2996 | -- = -- |
| Ti + O₂ → TiO₂ | 48/80 | 4.5, 4.26 | + 76 | 1666 | - 691.6 -0 = -691.6 |
| 2 V + 3/2 O₂ → V₂O₃ | 102/150 | 5.96, 4.87 | + 80 | 1890 | -- = -- |
| 2 V + 5/2 O₂ → V₂O₅ | 102/182 | 5.96, 3.36 | +216 | 668 | -- = -- |
| 2 Zn + O₂ → 2 ZnO | 65.4/81.4 | 7.1, 5.6 | + 58 | 419 | 2 (-183.9) -0 = -367.8 |
| Zr + O₂ → ZrO₂ | 91.2/123.2 | 6.5, 5.6 | + 56 | 1852 | - 834.7 -0 = -834.7 |

<u>Tabelle 1</u>: Chemisch-physikalische Daten einiger Metall-Oxid-Reaktionen

Die erfindungsgemäßen Pulvermischungen lassen sich, insbesondere aufgrund des duktilen Al-Pulveranteils, ohne Binde- oder Preßhilfsmittel unter Verwendung aller pulvermetallurgischen Verfahren formen, z.B. durch isostatisches Pressen, Extrudieren, Spritzgießen oder Schlickergießen.

Die Wärmebehandlung des Grünkörpers erfolgt vorzugsweise bei Temperaturen zwischen 700 und 1700 °C. Insbesondere ist es zweckmäßig, die Wärmebehandlung in zwei Stufen durchzuführen, und zwar insbesondere so, daß der Grünkörper zunächst bei Temperaturen zwischen ca. 700 und 1300 ° C reaktionsgeglüht wird, und anschließend bei Temperaturen zwischen ca. 1300 ° C bis 1700 ° C gesintert wird. In der ersten Stufe (zwischen 700 und 1300 ° C) erfolgt bei offener Porosität die Reaktion zu $SiO_2$ und teilweise zu Mullit bzw. $Al_2O_3$ und Mullit in einer Zeit zwischen ca. 2 und 20 Stunden. Die Reaktionsdauer ist von der Gründichte, von den Phasenanteilen, der Pulverteilchengröße und der Temperatur abhängig. Wenn die Mischung $ZrO_2$ enthält, kann die Reaktionszeit wesentlich verringert werden, z.B. bei ca. 15 Vol.-% $ZrO_2$ um einen Faktor von ca. 4. Auch ist in diesem Fall meist eine einstufige Reaktionssinterung ausreichend. In der zweiten Stufe (Wärmebehandlung oberhalb 1300 ° C) reagiert weiteres $SiO_2$ mit $Al_2O_3$ zu Mullit, und der Keramikformkörper wird bis zur gewünschten Dichte gesintert. Hierbei sind die üblichen Sinterzeiten, vorzugsweise zwischen 0.5 und 5 Stunden, erforderlich.

Die Reaktion in der ersten Stufe wird deutlich beschleunigt, wenn die sauerstoffhaltige Atmosphäre feucht ist, also Wasserdampf enthält, wenn die Atmosphäre bewegt wird, wenn reiner Sauerstoff verwendet wird oder wenn Sauerstoff im Gemisch mit Ar oder/und He eingesetzt wird. Dabei kann eines dieser bevorzugten Beschleunigungsmerkmale allein oder zusammen mit einem oder mehreren der anderen Beschleunigungsmitteln eingesetzt werden. Hierdurch läßt sich die Zeitdauer der Reaktion der 1. Erhitzungsstufe bei einer gegebenen Grünkörperzusammensetzung von 8 bis 15 Stunden in stehender Luft bis auf 1 bis 3 Stunden herabsetzen.

Durch Auswahl der geeigneten Wärmebehandlung im Rahmen der dafür vorstehend genannten Bedingungen läßt sich ein Keramikkörper mit einer sehr feinen, (< 1 $\mu$m) offenen Porosität erhalten. Ein solcher Körper eignet sich zum Infiltrieren mit metallischen oder anderen anorganischen Phasen, bzw. auch als Filter. Zur Herstellung eines solchen porösen Körpers wird die Wärmebehandlung vorzugsweise so durchgeführt, daß die Reaktionsphase mit einer kurzen Sinterphase kombiniert wird; oder die Sinterung wird nach einer relativ hohen Reaktionstemperatur ganz weggelassen.

Aufgrund der einstellbaren, sehr geringen Schrumpfung der erfindungsgemäßen Mullit-haltigen Keramik können nicht schrumpfende zweite Phasen in Form von Teilchen, Fasern, Plättchen, usw. eingebracht werden, ohne daß festigkeitsmindernde Spannungen auftreten. Die erfindungsgemäße Keramik stellt also eine ideale Matrix sowohl für verstärkende und/oder verschleißmindernde Phasen als auch für Phasen dar, die andere (z.B. elektronische) Funktionen übernehmen können. Die Einlagerung solcher Phasen wird durch die geringen Reaktionstemperaturen begünstigt. So lassen sich beispielsweise sehr grobe SiC-Plättchen (ca. 10 bis 200 $\mu$m) in einer Mullit/$Al_2O_3$-Matrix an der Luft einlagern, ohne daß wesentliche Reaktionen dabei auftreten. Ähnliche Verhältnisse können auch bei anderen Phasen, wie z.B. TiC, $TiB_2$, $B_4C$ usw., festgestellt werden.

Durch eine entsprechende Verfahrensführung kann bei Mischungen aus $Al_2O_3$ und SiC auch nur eine äußere Schicht der SiC-Teilchen für die Mullitkeramikbildung herangezogen werden, während das Innere der SiC-Teilchen als reines SiC im fertigen Keramikformkörper erhalten bleibt. Bei SiC-Teilchen mit einem Durchmesser > 3 -$\mu$m bleibt fast immer ein innerer SiC-Kern nach der Reaktion und Sinterung erhalten.

Vorzugsweise enthält die erfindungsgemäß eingesetzte feindisperse Ausgangsmischung > 10 Vol.-%, insbesondere 25 bis 50 Vol.-% Al und/oder Si-haltige Al-Legierung.

In einer bevorzugten Ausführungsform enthält der erfindungsgemäße Keramikformkörper nach der Wärmebehandlung neben 5 bis 100 Vol.-% Mullit und 0 bis 80 Vol.-% Oxid der Gruppe $Al_2O_3$,$ZrO_2$, Zirkon, $Al_2TiO_5$, Cordierit, $MgAl_2O_4$ weitere in Tabelle 1 aufgeführte Oxide.

Das Si-haltige Material wird vorzugsweise aus einer oder mehreren der folgenden Stoffe ausgewählt: Elementares Si, SiC, $Si_3N_4$, $ZrSiO_4$ (Zirkon), $MgSiO_3$, Cordierit. Es liegt in der Ausgangsmischung in einer Menge Zwischen 5 und 30 Vol.-%, vorzugsweise in einer Menge von mindestens 10 Vol.-% vor.

Das erfindungsgemäß eingesetzte Aluminiumpulver kann ganz oder teilweise durch ein Si-haltiges Aluminiumlegierungspulver ersetzt werden.

Vorzugsweise beträgt die Längenänderung (insbesondere Schrumpfung) zwischen dem Grünkörper und dem wärmebehandelten Formkörper weniger als ± 10 %, insbesondere weniger als ± 1 %.

In einer zweckmäßigen Ausführungsform kann der erfindungsgemäße Keramikformkörper nicht schrumpfende Verstärkungs- und/oder Funktionselemente in Form von kugeligen, plättchenoder faserförmigen Teilchen enthalten, insbesondere in einem Volumenanteil zwischen 5 und 50 %, und/oder in Abmessungen zwischen 5 und 500 $\mu$m eingelagert enthalten. Diese Einlagerungselemente bestehen vorzugsweise aus Oxiden, Karbiden, Nitriden, Siliziden und/oder Boriden.

Gegenstand der vorliegenden Erfindung ist auch ein Verfahren zur Herstellung der erfindungsgemäßen Keramikformkörper, das dadurch gekennzeichnet ist, daß man einen aus einer feindispersen Mischung aus Al, $Al_2O_3$ und einem Si-haltigen Material geformten Grünkörper in einer sauerstoffhaltigen Atmosphäre einer Wärmebehandlung unterzieht.

EP 0 531 378 B1

Vorzugsweise wird diese Mischung attritiert und dann daraus ein Grünkörper geformt; insbesondere attritiert man mindestens eine Stunde, und insbesondere 1 bis 8 Stunden.

In einer weiteren bevorzugten Ausführungsform wird Al-Pulver zum Teil durch die in Tabelle 1 aufgeführten Metalle ersetzt, wobei besonders die bevorzugt werden, die eine große Volumenänderung bei der Oxidation aufweisen, z.B. Cr ($\rightarrow Cr_2O_3$ 102 %) oder Nb ($\rightarrow Nb_2O_5$ 174 %).

In einer zweckmäßigen Ausführungsform werden zur Herstellung der feindispersen Pulvermischung das Al und Si und/oder die Si-haltigen Verbindungen mit grobem $Al_2O_3$-Pulver, insbesondere mit einer Größe zwischen 3 und 30 $\mu$m, in einem flüssigen Medium attritiert, vorzugsweise unter Verwendung von $ZrO_2$-Mahlkörpern, insbesondere TZP-Mahlkörpern. Der hierbei entstehende Mahlkörperabrieb (ca. 2 bis 6 Vol-% der Gesamtmischung) hat einen vorteilhaften Einfluß auf das Verfahren, der vermutlich katalytischer Natur ist. Das grobe $Al_2O_3$-Pulver kann dabei ganz oder teilweise durch grobes SiC- und/oder $Si_3N_4$-Pulver als Mahlunterstützung, vorzugsweise mit der gleichen Teilchengröße, ersetzt werden. $Al_2O_3$ muß dann jedoch in feiner Form, vorzugsweise < 1 $\mu$m, beigemischt werden. Wenn grobes $Al_2O_3$-Pulver verwendet wird, kann die Si-haltige Komponente (z.B. SiC) auch in sehr feiner (< 1 $\mu$m) Form zugesetzt werden.

Die Wärmebehandlung des Grünkörpers wird vorzugsweise bei Temperaturen zwischen 700 und 1700 °C durchgeführt. Dabei ist es insbesondere zweckmäßig, die Wärmebehandlung in zwei Stufen durchzuführen, wobei der Grünkörper zunächst bei Temperaturen zwischen ca. 700 und 1300 °C reaktionsgeglüht wird, und anschließend bei ca. 1300 °C bis 1700 °C gesintert wird. Man erhält so den angestrebten dichten und festen Körper. Dabei ist es, falls erwünscht, auch möglich, die Bedingungen der Wärmebehandlung so auszuwählen, daß sich eine definierte feine und offene Porosität ergibt. Diese ermöglichen es, in dem erhaltenen Keramikformkörper die Poren mit einer Flüssigkeit im Vakuum oder unter Druck, insbesondere bei 0.1 bis 100 MPa Argondruck zu infiltrieren. Die Flüssigkeit zur Infiltration ist vorzugsweise ausgewählt aus der Gruppe Al, Al-Legierung, Si und/oder Si-Legierung; insbesondere ist die Flüssigkeit Al und/oder eine Al-Legierung; oder Si und/oder eine Si-Legierung.

Zur Oberflächenbehandlung wird der Formkörper zweckmäßigerweise in einer Sauerstoff- oder Stickstoffhaltigen Atmosphäre geglüht.

Ausführungsformen der vorliegenden Erfindung betreffen auch reaktionsgebundene mullithaltige Keramikformkörper, bzw. ein Verfahren zur Herstellung unter Verwendung der vorstehend für die Keramikformkörper und das Verfahren zu ihrer Herstellung gemäß der DE-A-3812266 angegebenen Ausgangsprodukte, Reaktionsmischungen und Reaktionsbedingungen in Kombination mit der erfindungswesentlichen Verwendung des Si-haltigen Materials, und insbesondere in Kombination mit den vorstehend als bevorzugt genannten erfindungsgemäßen Ausführungsformen.

Gegenstand der vorliegenden Erfindung sind auch die nach den vorstehend genannten bevorzugten Ausführungsformen oder deren Kombinationen erhältlichen Keramikformkörper.

Weiterer Gegenstand der vorliegenden Erfindung ist auch die Verwendung der erfindungsgemäßen keramischen Formkörper als verschleiß- und/oder hochtemperaturfeste Komponente (Konstruktionsteile) im Maschinen-, Apparate- und Motorenbau, als Schneidwerkzeug, als Lager- und Dichtungselement, und/oder als Funktionsteil in elektronischen Apparaten.

Die vorstehend genannten Verwendungsmöglichkeiten der erfindungsgemäßen reaktionsgebundenen Mullit-haltigen Keramikformkörper beruhen auf ihren hervorragenden Eigenschaften, insbesondere auf den folgenden Eigenschaften:

1. Die Schrumpfung liegt immer unterhalb von 10 %, insbesondere unterhalb von 1 %, und in der Regel zwischen 0 und 4 %.

2. Die erfindungsgemäßen Keramikformkörper besitzen praktisch keine amorphen intergranularen Phasen.

3. Es läßt sich eine sehr feine offene Porosität, insbesondere einer Größe < 1 $\mu$m, einstellen;

4. Es können grobe zweite Phasen spannungsfrei eingelagert werden;

5. Die Verfahrenstemperaturen sind für Mullitkeramiken vergleichsweise niedrig;

6. Es können billige und leicht erhältliche verunreinigte Rohstoffe eingesetzt werden.

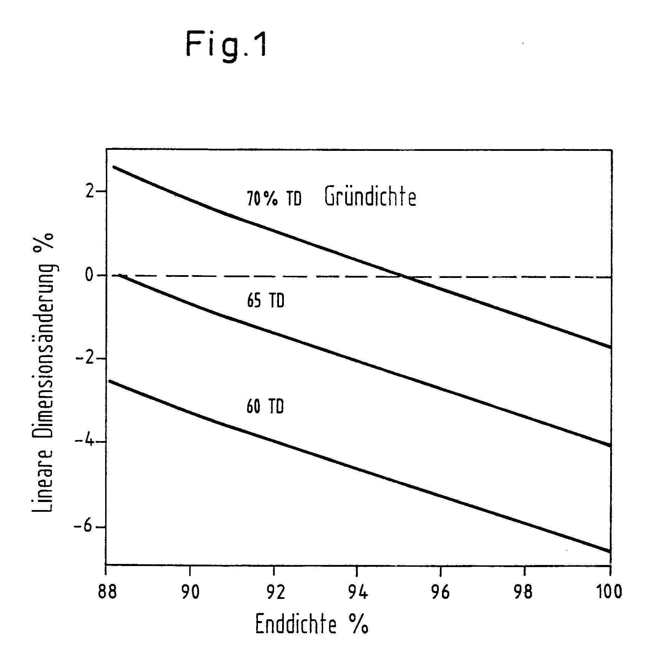

In der Figur 1 wird die lineare Dimensionsänderung (L) in Abhängigkeit von der Enddichte (Sinterdichte) sowie von der Gründichte dargestellt für eine Ausgangszusammensetzung von 20 Vol.-% SiC, 50 Vol.-% Al und 30 Vol.-% $Al_2O_3$; es ergibt sich eine Null-Schrumpfung bei einer Sinterdichte von 95 % TD, wenn der Grünkörper eine Dichte von 70 % TD aufwies.

Die lineare Schrumpfung (L) in Prozent kann durch die folgende Beziehung ausgedrückt werden:

$$L = \left(\frac{\rho_0 \cdot K}{\rho}\right)^{1/3} - 1 \qquad\qquad (1)$$

worin $\rho_0$ die Gründichte und $\rho$ die Enddichte nach Reaktion und Sinterung ist.

$$K = \Delta_1 V_1 + \Delta_2 V_2 + \Delta_3 V_3 + V_{Al203} \qquad (2)$$

worin $\Delta$ der bei einer Reaktion auftretende Volumengewinn und V die Volumenfraktion der entsprechenden Ausgangsphase bedeuten. Für die Verwendung von SiC (unter Bildung von $SiO_2$) gilt beispielsweise:

$\Delta SiC = 2.08$ (108 % Volumenzunahme).

Für Al (Bildung von $Al_2O_3$) gilt:

$\Delta Al = 1.28$ (28 %),

und für Zirkon (Bildung von $ZrO_2$ und Mullit) gilt:

$\Delta ZrSiO_4 = 1.27$ (27 %).

In Beispielen wurden Mischungen aus 20 Vol.-% SiC ($V_{SiC} = 0.2$), 50 Vol.-% Al ($V_{Al} = 0.5$) und 30 Vol.-% $Al_2O_3$ ($V_{Al203} = 0.3$) verwendet, woraus sich ein K-Wert ergibt von:

$K = 2.08 \times 0.2 + 1.28 \times 0.5 + 0.3$

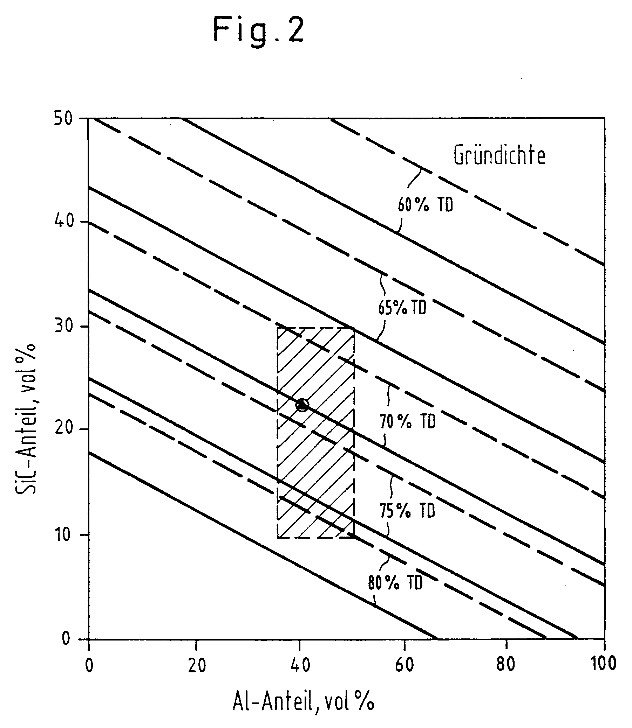

Die Figur 2 zeigt für eine $Al_2O_3$/SiC/Al-Mischung den Zusammenhang zwischen dem Anteil an SiC und Al sowie den Grün- und Enddichten unter der Annahme einer Null-Schrumpfung. Die gestrichelte Linie gilt für einen Körper mit 100 % TD (TD = theoretische Dichte), und die durchgezogene Linie gilt für einen Körper mit 95 % TD. Das schraffierte Feld gibt den technisch sinnvollen Bereich an, für den die entsprechenden Gründichten mit isostatischen Preßdrücken von z.B. 300 bis 700 MPa hergestellt werden können. Der in der Figur 2 im schraffierten Bereich angegebene Punkt sagt aus, daß ein Keramikformkörper mit einer Enddichte von 95 % TD für eine Null-Schrumpfung eine Gründichte von 70 % TD aufweisen muß (durch einen entsprechenden Preßdruck einstellbar), wenn er aus einer Mischung aus 22.5 Vol.-% SiC, 40 Vol.-% Al und 35.5 Vol.-% $Al_2O_3$ hergestellt wird. (Dabei ist die geringe Volumenzunahme bei der Reaktion von $SiO_2$ und $Al_2O_3$ zu Mullit, die 13 % beträgt, sowie der Anteil der beim Mahlen entstandenen $Al_2O_3$-Haut um die Al-Partikel nicht berücksichtigt; er kann je nach Mahldauer bis 40 % des eingesetzten Al-Pulvers betragen).

Die nachfolgenden Beispiele sollen nun die Erfindung näher erläutern, ohne sie darauf zu beschränken. Soweit nicht anders angegeben, beziehen sich Prozentangaben auf das Volumen, und Temperaturangaben auf die Celsius-Skala.

Beispiel 1

150 g eines Pulvers aus 45 Vol.-% Al Pulver (Alcan 105, 20 - 50 $\mu$m, Alcan, Montreal/Kanada), 35 Vol.-% $Al_2O_3$ (Dycron 13, 13 $\mu$m Durchmesser, Hüls AG, Troisdorf), 15 Vol.-% SiC (Norton 1000 Grit, 5.0 $\mu$m Durchmesser, Norton, USA) und 5 Vol.-% $ZrO_2$ (TZ-2Y, Tosoh, Japan < 1 $\mu$m Durchmesser) wurden 8 Stunden in einer Attritormühle mit 3 mm TZP-Mahlkugeln in Aceton gemahlen. Infolge des Mahlabriebs von den TZP-Kugeln (aus $3Y_2O_3$-$ZrO_2$ = 3YTZP) wurden weitere 4 Vol.-% $ZrO_2$ bezogen auf die Gesamtmischung eingebracht. Die mittlere Pulverteilchengröße wurde dadurch auf < 1 $\mu$m reduziert. Danach wurde die Mischung in einem Rotationstrockner getrocknet und anschließend isostatisch zu Platten mit den Abmessungen 40 x 40 x 8 mm unter einem Druck von 300 bis 500 MPa gepreßt. Anschließend wurden die Proben an Luft mit 10 K/min auf 1150 °C aufgeheizt und 8 Stunden auf dieser Glühstufe gehalten. Dann wurden sie in einer zweiten Glühstufe 5 Stunden bei 1500 °C wärmebehandelt.

Alle Proben wiesen danach eine Dichte von über 94 % TD (theoretische Dichte) auf, wobei sehr feine geschlossene Poren mit Durchmessern < 0.1 $\mu$m erhalten wurden. Die Körper enthielten kein SiC mehr; sie bestanden überwiegend aus Mullit mit einer feinen (< 0.5 $\mu$m) Korngröße und aus $Al_2O_3$ und feinverteilten $ZrO_2$. Spuren von Zirkon ($ZrSiO_4$) konnten ebenfalls nachgewiesen werden. Die Korngrenzen enthielten kaum silikatische Glasphasen. Die Schrumpfung (lineare Differenz zwischen den Abmessungen des Grün- und Sinterkörpers) betrug bei einem isostatischen Preßdruck von 500 MPa 0.4 %, und bei 300 MPa 2.9 %. Die mittlere 4-Punkt-Biegefestigkeit betrug 340 MPa.

### Beispiel 2

Wie im Beispiel 1 beschrieben wurde eine Mischung 50 Vol.-% Al, 30 Vol.-% $Al_2O_3$ und 20 Vol.-% SiC attritiert, getrocknet und bei 300 MPa isostatisch gepreßt. Die Wärmebehandlung war die folgende: 1. Stufe 8 Stunden bei 1300°C, 2. Stufe 3 Stunden bei 1650°C. Die Schrumpfung betrug danach 0.5 % bei einer Dichte von ca. 96 % TD. Der Sinterkörper bestand hauptsächlich aus feinkristallinem Mullit und $Al_2O_3$, mit Spuren von SiC.

### Beispiel 3

Dieses Beispiel diente zur Durchführung des in Figur 2 dargestellten Tests.

Wie im Beispiel 1 beschrieben wurde eine Mischung aus 22.5 Vol.-% SiC, 40 Vol.-% Al und 37.5 Vol.-% $Al_2O_3$ attritiert und wärmebehandelt. Bei einem isostatischen Preßdruck von 400 MPa wurde eine Gründichte von 70.3 % TD erzielt. Die Sinterdichte betrug ca. 94 % TD, bei einer Schrumpfung von 2.1 %. D.h., die hierfür berechnete "Null"-Schrumpfung wurde nicht ganz erreicht, weil die beim Attritieren entstandene Oxidhaut um die Al-Teilchen in der Gleichung nicht berücksichtigt wurde.

### Beispiel 4

Wie im Beispiel 1 beschrieben wurde eine Mischung aus 40 Vol.-% Al, 40 Vol.-% $Al_2O_3$, 10 Vol.-% SiC und 10 Vol.-% Zirkon (Zirkosil 1, Auer-Remy, < 1 $\mu$m) attritiert, getrocknet und wärmebehandelt. Bei einem isostatischen Preßdruck von 700 MPa betrug die Enddichte des Sinterkörpers ca. 94 % TD, bei einer Schrumpfung von 0 %. Der Körper bestand danach aus $Al_2O_3$ und Mullit mit feinverteiltem tetragonalen $ZrO_2$. Röntgenographisch ließen sich ebenfalls Spuren von Zirkon feststellen. Amorphe intergranulare Phasen konnten im TEM nicht festgestellt werden.

### Beispiel 5

Wie im Beispiel 1 beschrieben wurde eine Mischung aus 45 Vol.-%, 16 Vol.-% $Al_2O_3$, 30 Vol.-% SiC, 4 Vol.-% Zirkon und 5 Vol.-% $ZrO_2$ attritiert und wärmebehandelt. Nach isostatischer Pressung bei 300 MPa wurden Körper mit einer Dichte von ca. 94 % TD, bei einer Schrumpfung von 0.9 % erhalten. Der anschließend erhaltene Sinterkörper bestand aus Mullit mit feinverteiltem $ZrO_2$ und Zirkon.

### Beispiel 6

Ein bei 300 MPa gepreßter Grünkörper gemäß Beispiel 5 wurde einer einstufigen Wärmebehandlung während 3 Stunden bei 1600°C unterzogen. Die Aufheizgeschwindigkeit betrug 10 K/min. Der Sinterkörper bestand aus > 20 Vol.-% SiC, eingebettet in eine $Al_2O_3$-Matrix mit Anteilen aus Mullit, $ZrO_2$ und Zirkon.

### Beispiel 7

Wie im Beispiel 1 beschrieben wurde eine Mischung aus 30 Vol.-% Al, 55 Vol.-% $Al_2O_3$ und 25 Vol.-% Zirkon attritiert und wärmebehandelt. Bei einer Schrumpfung von 3.5 % und einer Sinterdichte von ca. 95 % TD bestand der Körper nach einer isostatischen Vorpressung bei 900 MPa aus einer Mullitmatrix mit feinverteiltem $Al_2O_3$ und tetragonalem $ZrO_2$.

### Beispiel 8

Die attritierte Pulvermischung von Beispiel 4 wurde bei 500 und 700 MPa isostatisch gepreßt und anschließend in einer 1. Stufe bei 1200°C 6 Stunden lang, in einer 2. Stufe bei 1550°C 3 Stunden lang geglüht. In beiden Fällen wurden ca. 95 % TD bei einer Schrumpfung von 4.5 % (500 MPa isostatischer Preßdruck) und 2.7 % (700 MPa) erreicht. Die Sinterkörper bestanden aus Mullit und $Al_2O_3$ mit feinverteiltem t-$ZrO_2$ und Spuren von Zirkon.

Beispiel 9

Wie im Beispiel 1 angegeben wurde eine Mischung aus 45 Vol.-% Al, 30 Vol.-% $Al_2O_3$, 15 Vol.-% SiC und 10 Vol.-% $ZrO_2$ attritiert, bei 300 MPa gepreßt und bei 1200°C 6 Stunden lang und bei 1550°C 2 Stunden lang wärmebehandelt. Bei einer Dichte von ca. 96 % TD betrug die Schrumpfung 2.5 % und der Körper bestand etwa zu gleichen Teilen aus Mullit und $Al_2O_3$, mit feinverteiltem tetragonalem $ZrO_2$, ohne intergranulare Glasphasen. Die mittlere 4-Punkt-Biegefestigkeit betrug 380 MPa.

Beispiel 10

Die Mischung gemäß Beispiel 9 wurde in einer 1. Stufe bei 1200°C 6 Stunden lang, und in einer 2. Stufe bei 1300°C 1 Stunde lang geglüht. Bei einer geringfügigen Ausdehnung von + 0.8 % betrug die Dichte ca. 75 % TD, wobei der Körper eine feine offene Porosität im Bereich von 0.1 bis 0.7 $\mu$m aufwies.

Beispiel 11

Der nach Beispiel 10 hergestellte Körper wurde bei 60 bar unter einer Temperatur von 900°C mit flüssigem Al infiltriert. Die Probe war danach elektrisch leitfähig und wies eine Eindruckbruchzähigkeit von 7.5 MPa m und eine 4-Punkt-Biegefestigkeit von 740 MPa auf.

Beispiel 12

70 Vol.-% der nach Beispiel 9 attritierten Pulvermischung wurden 30 Vol.,-% SiC-Platelets (Alcan, Durchmesser 20 bis 100 $\mu$m) zugemischt. Die Zumischung erfolgte in der Attritormühle bei halbierter Drehzahl (500 Upm) während einer Dauer von 30 min. Bei 300 MPa gepreßte Grünkörper wurden wie in Beispiel 9 wärmebehandelt. Die Schrumpfung betrug danach 0.4 %, bei einer Enddichte von ca. 85 TD. Die Proben wurden anschließend wie in Beispiel 11 mit Al infiltriert. Die mittlere Biegefestigkeit betrug danach 590 MPa.

Beispiel 13

Wie in Beispiel 12 beschrieben, wurden einer nach Beispiel 1 attritierten Pulvermischung 40 Vol.-% $Al_2O_3$-Platelets (Showa Aluminum, Tokyo, Japan; 15 - 20 $\mu$m) zugemischt. Danach wurden bei 500 MPa isostatisch gepreßte Körper bei 1200°C 8 Stunden lang und bei 1350°C 2 Stunden lang an Luft wärmebehandelt.
Die offene Porosität betrug danach > 15 %. Wie in Beispiel 11 beschrieben, wurden die Proben mit Al infiltriert. Die mittlere 4-Punkt-Biegefestigkeit betrug danach 750 MPa.

Beispiel 14

Wie in Beispiel 1 beschrieben wurde eine Mischung aus 45 Vol.-% Al, 40 Vol.-% $Al_2O_3$ und 15 Vol.-% SiC (Lonza, Schweiz UF 15, < 0,5 $\mu$m) attritiert und bei 300 MPa isostatisch gepreßt. Die Proben wurden danach in einer 1. Stufe bei 1200°C 6 Stunden lang, und in einer 2. Stufe bei 1700°C 2 Stunden lang geglüht. Der Körper bestand anschließend aus $Al_2O_3$ mit > 20 Vol.-% feinkristallinem Mullit. Er besaß eine Dichte von ca. 95 % TD: Die Schrumpfung betrug 2.1 %.

Beispiel 15

Es wird wie in Beispiel 14 verfahren.
Mischung aus 40 Vol.-% Al, 15 Vol.-% SiC (< 1 $\mu$m, Sika III, Firma Sika, Norwegen) 22,5 Vol.-% $Al_2O_3$ - (Dycron 13, s. Beispiel 1), 22,5 % $Al_2O_3$ (< 1 $\mu$m, CT 3000 Alcoa USA). Aufheizzyklus wie in Beispiel 1:
   1. Stufe bei 1100°C 15 Stunden
   2. Stufe bei 1400°C 8 Stunden
Schrumpfung: 2 %

4-Punkt-Biegefestigkeit: 355 MPa
Material wird nochmal bei 1600 °C gesintert
Schrumpfung: 1,2 %,
Festigkeit stieg auf 430 MPa.

Beispiel 16

Die Pulvermischung aus Beispiel 1 wurde mit 300 MPa isostatisch gepreßt und an fließender, feuchter Luft (50 cm$^3$/min durch Wasser gefördert) zunächst bei 1050 °C 2 h reagiert und anschließend 2 h bei 1550 °C gesintert. Die Schrumpfung betrug dabei 3 % bei einer Enddichte von 93 % TD. Die Probe bestand überwiegend aus Mullit mit einer sehr feinen Korngröße (< 0,2 $\mu$m).

Beispiel 17

Eine Pulvermischung wie in Beispiel 1, nur statt 15 Vol.-% SiC wurden 15 Vol.-% Si-Pulver (H.C. Starck, Berlin, ~ 13 $\mu$m) verwendet, wurde mit 160 MPa isostatisch gepreßt und anschließend unter reinem Sauerstoff 1 h bei 1050 °C reagiert und danach 2 h bei 1550 °C gesintert. Die Probe zeigte dabei eine Schrumpfung von 2,5 % bei einer Dichte von 91 % TD. Sie bestand überwiegend aus Mullit.

Beispiel 18

100 g der Pulvermischung aus Beispiel 17 wurden mit 100 g groben $Al_2O_3$-Partikeln (~ 53 $\mu$m, Schmelzkorund, H.C. Stark, Berlin) in einem Trommelmischer 6 h in Aceton vermischt, anschließend in einem Trockenschrank bei 95 °C getrocknet und danach mit 160 MPa isostatisch verpreßt. Der Reaktionsbindevorgang wurde ebenfalls wie in Beispiel 17 gewählt. Danach entstand ein fester, offenporiger Körper (Porengröße 10 - 20 $\mu$m), in dem die großen $Al_2O_3$-Partikel über Mullit-Brücken verbunden waren. Eine Schrumpfung trat beim Reaktionssintern nicht auf.
(Dieser Versuch zeigt, daß die Erfindung auch zur Herstellung von Feinstfilterträgern geeignet ist.)

Beispiel 19

Wie in Beispiel 18 wurden statt der Schmelzkorundpartikel $Al_2O_3$-Kügelchen ( ~ 100 $\mu$m), die durch trockene Agglomeration und anschließendes Dichtsintern hergestellt waren, eingesetzt. Der daraus entstandene Filterträger wies eine Porengröße von 28 % (Porengröße 20 - 30 $\mu$m) auf bei einer Biegefestigkeit von 95 MPa.

Beispiel 20

Die Mischung aus Beispiel 1 wurde mit 0,4 Gew.-% Dispergiermittel (MDIT, Hoechst AG), 0,7 Gew.-% Bindemittel (D 79, Monsanto), 6 Gew.-% Bindemittel (B 98, Monsanato), 3,2 Gew.-% Plastifizierungsmittel (PEG 300, Merck AG) und 2,5 Gew.-% Plastifizierungsmittel (Dibutylphtalat, Merck AG) versetzt. Diese Zusammensetzung (35 Vol.-%) wurde mit 65 Vol.-% eines Lösungsmittels (MEK und Ethanol) vermischt und auf einem Tape Caster zu Filmen von 250 $\mu$m Dicke gegossen. Eine Schichtung von 10 Filmen wurde bei 120 °C laminiert und anschließend bei 550 °C ausgebrannt. Danach wurde der Probekörper wie in Beispiel 1 reaktionsgesintert. Bei einer Schrumpfung von 0,5 % betrug die Dichte 91 %. Das Gefüge war wie das in Beispiel 1.

Beispiel 21

150 g einer Pulvermischung aus 45 Vol.-% Al (wie Beispiel 1) 10 Vol.-% Cr (Ventron Chemie), 5 Vol.-% Si (H.C. Starck) und 40 Vol.-% $Al_2O_3$ (CT 3000, Alcoa, USA) wurden wie in Beispiel 19 behandelt. Bei nahezu Null-Schrumpfung enthielt die Probe überwiegend $(Al/Cr)_2O_3$ (Rubin) und etwas Mullit.

Beispiel 22

Es wurde wie in Beispiel 21 verfahren, nur daß statt Cr 10 Vol.-% Zr (Ventron Chemie) eingesetzt wurde. Der entstandene Körper enthielt 93 % TD $Al_2O_3$ mit feinverteiltem tetragonalen $ZrO_2$ sowie etwas Mullit.

**Patentansprüche**

1. Reaktionsgebundener Mullit-haltiger Keramikformkörper,
   **dadurch gekennzeichnet,**
   daß er praktisch keine amorphen intergranularen Phasen aufweist, aus 5 bis 100 Vol.-% Mullit, 0 bis 80 Vol.-% mindestens eines Oxids aus der Gruppe $Al_2O_3$, $ZrO_2$, Zirkon, Cordierit und $MgAl_2O_4$ besteht, wobei der Mullitgehalt durch Wärmebehandlung eines aus einer feindispersen Pulvermischung aus Aluminium, $Al_2O_3$ und einem Si-haltigen Material geformten Körpers in einer Sauerstoff-haltigen Atmosphäre durch Reaktion der Komponenten gebildet wird.

2. Keramikformkörper nach Anspruch 1,
   **dadurch gekennzeichnet,**
   daß die Pulvermischung mindestens 10 Vol.-% insbesondere 25 bis 50 Vol.-%, Aluminium enthält.

3. Keramikformkörper nach einem der Ansprüche 1 oder 2,
   **dadurch gekennzeichnet,**
   daß das Si-haltige Material ausgewählt ist aus einem oder mehreren der folgenden Stoffe: Elementares Si, SiC, $Si_3N_4$, $ZrSiO_4$, $MgSiO_3$, Cordierit.

4. Keramikformkörper nach einem der vorhergehenden Ansprüche,
   **dadurch gekennzeichnet,**
   daß das Aluminiumpulver teilweise durch ein Si-haltiges Aluminiumlegierungspulver ersetzt ist.

5. Keramikformkörper nach Anspruch 4,
   **dadurch gekennzeichnet,**
   daß zusätzlich zum Aluminiumpulver, $Al_2O_3$ und/oder Sihaltigen Aluminiumlegierungspulver feinkörniges SiC Pulver mit einem mittleren Durchmesser von weniger als < 1 $\mu$m zugesetzt wird.

6. Keramikformkörper nach einem der vorhergehenden Ansprüche,
   **dadurch gekennzeichnet,**
   daß die Längenänderung zwischen dem Grünkörper und dem wärmebehandelten Körper weniger als 10 %, insbesondere weniger als 1 % beträgt.

7. Keramikformkörper nach einem der vorhergehenden Ansprüche,
   **dadurch gekennzeichnet,**
   daß er nicht schrumpfende Verstärkungs- und/oder Funktionselemente in Form von kugeligen, plättchen- oder faserförmigen Teilchen enthält.

8. Keramikformkörper nach Anspruch 7,
   **dadurch gekennzeichnet,**
   daß er die Verstärkungs- und/oder Funktionselemente in einem Anteil zwischen 5 und 50 Vol.-% enthält.

9. Keramikformkörper nach Anspruch 7 oder 8,
   **dadurch gekennzeichnet,**
   daß die Verstärkungs- und/oder Funktionselemente Abmessungen zwischen 5 und 500 $\mu$m besitzen.

10. Keramikformkörper nach einem der Ansprüche 7 bis 9,
    **dadurch gekennzeichnet,**
    daß die Verstärkungs- und/oder Funktionselemente aus Oxiden, Carbiden, Nitriden, Siliziden und/oder Boriden bestehen.

11. Keramikformkörper nach einem der vorhergehenden Ansprüche,
    **dadurch gekennzeichnet,**
    daß Aluminium teilweise durch ein oder mehrere pulverförmige Metalle, bzw. Metalloide aus der Gruppe Co, Cr, Cu, Fe, Mg, Mn, Nb, Ni, Ta, Ti, V, Zn, Zr, ersetzt ist.

EP 0 531 378 B1

**12.** Keramikformkörper nach Anspruch 11,
**dadurch gekennzeichnet,**
daß bis zu 50 % des Aluminiums ersetzt sind.

**13.** Verfahren zur Herstellung eines Keramikformkörpers nach einem der Ansprüche 1 bis 12,
**dadurch gekennzeichnet,**
daß man einen aus einer feindispersen Mischung aus Al, $Al_2O_3$ und einem Si-haltigen Material geformten Grünkörper in einer Sauerstoff-haltigen Atmosphäre einer Wärmebehandlung unterzieht.

**14.** Verfahren nach Anspruch 13,
**dadurch gekennzeichnet,**
daß man eine Mischung aus Aluminium, $Al_2O_3$ und dem Sihaltigen Material attritiert und dann daraus einen Grünkörper formt.

**15.** Verfahren nach Anspruch 4,
**dadurch gekennzeichnet,**
daß man mindestens eine Stunde, und insbesondere 1 bis 4 Stunden lang attritiert.

**16.** Verfahren nach einem der Ansprüche 14 oder 15,
**dadurch gekennzeichnet,**
daß man das Al und Si und/oder die Si-haltigen Verbindungen mit groben $Al_2O_3$-Pulver in einem flüssigen Medium attritiert.

**17.** Verfahren nach Anspruch 16,
**dadurch gekennzeichnet,**
daß das $Al_2O_3$-Pulver eine Größe zwischen 3 und 30 $\mu$m besitzt.

**18.** Verfahren nach einem der Ansprüche 14 bis 17,
**dadurch gekennzeichnet,**
daß als Si-haltiges Material SiC bzw. $Si_3N_4$ in feiner (< 1 $\mu$m) Form zugesetzt wird.

**19.** Verfahren nach Anspruch 16 oder 17,
**dadurch gekennzeichnet,**
daß das grobe $Al_2O_3$-Pulver teilweise durch grobes SiC- und/oder $Si_3N_4$-Pulver ersetzt ist.

**20.** Verfahren nach Anspruch 19,
**dadurch gekennzeichnet,**
daß das grobe $Al_2O_3$ ganz oder teilweise durch feines (< 1 $\mu$m) $Al_2O_3$ ersetzt wird.

**21.** Verfahren nach einem der vorhergehenden Ansprüche,
**dadurch gekennzeichnet,**
daß die Wärmebehandlung bei einer Temperatur zwischen 700 und 1700 °C erfolgt.

**22.** Verfahren nach Anspruch 21,
**dadurch gekennzeichnet,**
daß der Grünkörper zunächst bei Temperaturen zwischen ca. 700 und 1300 °C reaktionsgeglüht wird, und anschließend bei ca. 1300 bis 1700 °C gesintert wird.

**23.** Verfahren nach Anspruch 13, 19 oder 20,
**dadurch gekennzeichnet,**
daß die Wärmebehandlung in einer Sauerstoff-haltigen Atmosphäre durchgeführt ist, die feucht ist, oder/und bewegt wird oder/und aus reinem Sauerstoff oder/und aus Sauerstoff in Gemisch mit Argon oder/und Helium besteht.

**24.** Verfahren nach Anspruch 21 oder 22,
**dadurch gekennzeichnet,**
daß die Bedingungen der Wärmebehandlung so ausgewählt werden, daß sich eine definierte feine und offene Porosität ergibt.

14

**25.** Verfahren nach einem der Ansprüche 13 bis 24,
**dadurch gekennzeichnet,**
daß in dem erhaltenen Keramikformkörper die Poren mit einer Flüssigkeit im Vakuum oder unter Druck infiltriert werden.

**26.** Verfahren nach Anspruch 25,
**dadurch gekennzeichnet,**
daß bei einem Argondruck von 0.1 bis 100 MPa infiltriert wird.

**27.** Verfahren nach Anspruch 25 oder 26,
**dadurch gekennzeichnet,**
daß die Flüssigkeit ausgewählt ist aus der Gruppe Al, Al-Legierung, Si und/oder Si-Legierung.

**28.** Verfahren nach Anspruch 18 bis 27,
**dadurch gekennzeichnet,**
daß der Formkörper zur Oberflächenbehandlung in einer Sauerstoff- oder Stickstoff-haltigen Atmosphäre geglüht wird.

**29.** Verwendung eines Keramikformkörpers nach einem der Ansprüche 1 bis 12 oder eines nach einem der Ansprüche 13 bis 28 hergestellten Keramikformkörpers als verschleiß- und/oder hochtemperaturfeste Komponente im Maschinen-, Apparate- und Motorenbau.

**30.** Verwendung eines Keramikformkörpers nach einem der Ansprüche 1 bis 12 oder eines nach einem der Ansprüchen 13 bis 28 hergestellten Keramikformkörpers als Schneidwerkzeug, als Lager- und/oder Dichtungselement.

**31.** Verwendung eines Keramikformkörpers nach einem der Ansprüche 1 bis 12 oder eines nach einem der Ansprüche 13 bis 28 hergestellten Keramikformkörpers als Funktionsteil in elektronischen Apparaten.

**32.** Keramikformkörper nach einem der Ansprüche 1 bis 12,
**dadurch gekennzeichnet,**
daß die Pulvermischung zusätzlich $ZrO_2$, das gegebenenfalls stabilisiert ist, enthält.

**Claims**

**1.** Reaction-bonded moulded ceramic body containing mullite, wherein it contains almost no amorphous intergranular phases, is composed of 5 to 100 vol. % mullite, 0 to 80 vol. % of at least one oxide from the group $Al_2O_3$, $ZrO_2$, zircon, cordierite and $MgAl_2O_4$ in which the mullite content is formed by heat treating a body moulded from a finely dispersed powder mixture of aluminium, $Al_2O_3$ and a material containing Si in an atmosphere containing oxygen by reaction of the components.

**2.** Moulded ceramic body as claimed in claim 1,
**wherein**
the powder mixture contains at least 10 vol. % and in particular 25 to 50 vol. % aluminium.

**3.** Moulded ceramic body as claimed in one of the claims 1 or 2,
**wherein**
the material containing Si is selected from one or several of the following substances: elemental Si, SiC, $Si_3N_4$, $ZrSiO_4$, $MgSiO_3$, cordierite.

**4.** Moulded ceramic body as claimed in one of the previous claims,
**wherein**
the aluminium powder is partially replaced by an aluminium alloy powder containing Si.

**5.** Moulded ceramic body as claimed in claim 4,
**wherein**
in addition to aluminium powder, $Al_2O_3$ and/or aluminium alloy powder containing Si, fine-grained SiC powder with an average diameter of less than < 1 $\mu$m is added.

15

EP 0 531 378 B1

6. Moulded ceramic body as claimed in one of the previous claims,
   **wherein**
   the change in length between the green body and the heat treated body is less than 10 %, in particular less than 1 %.

7. Moulded ceramic body as claimed in one of the previous claims,
   **wherein**
   it contains non-shrinking strengthening and/or functional elements in the form of spherical, platelet-like or fibre-like particles.

8. Moulded ceramic body as claimed in claim 7,
   **wherein**
   it contains the strengthening and/or functional elements in a proportion of between 5 and 50 vol. %.

9. Moulded ceramic body as claimed in claim 7 or 8,
   **wherein**
   the strengthening and/or functional elements have dimensions of between 5 and 500 $\mu$m.

10. Moulded ceramic body as claimed in one of the claims 7 to 9,
    **wherein**
    the strengthening and/or functional elements are composed of oxides, carbides, nitrides, silicides and/or borides.

11. Moulded ceramic body as claimed in one of the previous claims,
    **wherein**
    aluminium is partially replaced by one or several metals or metalloids in powder form from the group Co, Cr, Cu, Fe, Mg, Mn, Nb, Ni, Ta, Ti, V, Zn, Zr.

12. Moulded ceramic body as claimed in claim 11,
    **wherein**
    up to 50 % of the aluminium is replaced.

13. Process for the production of a moulded ceramic body as claimed in one of the claims 1 to 12,
    **wherein**
    a green body formed from a finely dispersed mixture of Al, $Al_2O_3$ and a material containing Si is subjected to a heat treatment in an atmosphere containing oxygen.

14. Process as claimed in claim 13,
    **wherein**
    a mixture of aluminium, $Al_2O_3$ and a material containing Si is attrition milled and a green body is then formed from this.

15. Process as claimed in claim 4,
    **wherein**
    it is attrition milled for at least one hour, and in particular for 1 to 4 hours.

16. Process as claimed in one of the claims 14 or 15,
    **wherein**
    the Al and Si and/or the compounds containing Si are attrition milled in a liquid medium with coarse $Al_2O_3$ powder.

17. Process as claimed in claim 16,
    **wherein**
    the $Al_2O_3$ powder has a size of between 3 and 30 $\mu$m.

18. Process as claimed in one of the claims 14 to 17,
    **wherein**
    SiC or $Si_3N_4$ in a fine (< 1 $\mu$m) form is added as the material containing Si.

16

**19.** Process as claimed in claim 16 or 17,
**wherein**
the coarse $Al_2O_3$ powder is partially replaced by coarse SiC and/or $Si_3N_4$ powder.

**20.** Process as claimed in claim 19,
**wherein**
the coarse $Al_2O_3$ is replaced completely or partially by fine (< 1 $\mu$m) $Al_2O_3$.

**21.** Process as claimed in one of the previous claims,
**wherein**
the heat treatment is carried out at a temperature of between 700 and 1700°C.

**22.** Process as claimed in claim 21,
**wherein**
the green body is firstly reaction-annealed at temperatures of between ca. 700 and 1300°C and subsequently sintered at ca. 1300 to 1700°C.

**23.** Process as claimed in claim 13, 19 or 20,
**wherein**
the heat treatment is carried out in an atmosphere containing oxygen which is moist or/and agitated or/and consists of pure oxygen or/and of oxygen in a mixture with argon or/and helium.

**24.** Process as claimed in claim 21 or 22,
**wherein**
the conditions of the heat treatment are selected such that a defined fine and open porosity results.

**25.** Process as claimed in one of the claims 13 to 24,
**wherein**
the pores in the moulded ceramic body obtained are infiltrated with a liquid in a vacuum or under pressure.

**26.** Process as claimed in claim 25,
**wherein**
it is infiltrated under an argon pressure of 0.1 to 100 MPa.

**27.** Process as claimed in claim 25 or 26,
**wherein**
the liquid is selected from the group Al, Al alloy, Si and/or Si alloy.

**28.** Process as claimed in claim 18 to 27,
**wherein**
the moulded body is annealed in an atmosphere containing oxygen or nitrogen for surface treatment.

**29.** Use of a moulded ceramic body as claimed in one of the claims 1 to 12 or of a moulded ceramic body produced as claimed in one of the claims 13 to 28 as a wear-resistant and/or high temperature-resistant component in the construction of machines, apparatuses and motors.

**30.** Use of a moulded ceramic body as claimed in one of the claims 1 to 12 or of a moulded ceramic body produced as claimed in one of the claims 13 to 28 as a cutting tool or as a component for bearings and/or seals.

**31.** Use of a moulded ceramic body as claimed in one of the claims 1 to 12 or of a moulded ceramic body produced as claimed in one of the claims 13 to 28 as a functional part in electronic instruments.

**32.** Moulded ceramic bocy as claimed in one of the claims 1 to 12, wherein the powder mixture in addition contains $ZrO_2$ which is partially stabilized if desired.

17

**Revendications**

1. Corps céramique moulé contenant de la mullite, formé par réaction, caractérisé en ce qu'il ne présente pratiquement aucune phase intergranulaire amorphe, qu'il consiste en 5 jusqu'à 100% en volume de mullite, 0 à 80% au moins d'un oxyde du groupe $Al_2O_3$, $ZrO_2$ , zirkon, cordiérite et $MgAl_2O_4$, la teneur en mullite étant formée par traitement thermique d'un corps moulé à partir d'un mélange finement dispersée en aluminium $Al_2O_3$ et d'une matière à teneur de Si dans une atmosphère à teneur d'oxygène par réaction des composés.

2. Corps céramique moulé selon la revendication 1, caractérisé en ce que le mélange de poudre contient au moins 10% en volume, en particulier 25 à 50% en volume d'aluminium.

3. Corps céramique moulé selon l'une des revendications 1 ou 2, caractérisé en ce que la matière contenant Si est choisie à partir d'une ou de plusieurs des matières suivantes : Si, SiC, $Si_3N_4$, $ZrSiO_4$, $MgSiO_3$, cordiérite.

4. Corps céramique moulé selon l'une des revendications précédentes caractérisé en ce que la poudre d'aluminium est partiellement remplacée par une poudre d'alliage d'aluminium contenant du Si.

5. Corps céramique moulé selon la revendication 4, caractérisé en ce qu'en plus de la poudre d'aluminium on ajoute $Al_2O_3$ et/ou de la poudre d'alliage d'aluminium à teneur Si, de la poudre SiC à grains fins ayant un diamètre moyen < à $1\mu$.

6. Corps céramique moulé selon l'une des revendications précédentes, caractérisé en ce que la modification de longueur entre le corps cru et le corps traité thermiquement est inférieure à 10% en particulier inférieure à 1%.

7. Corps céramique moulé selon l'une des revendications précédentes, caractérisé en ce qu'il contient des éléments de renforcement et/ou fonctionnels, résistants au retrait sous forme de particules ayant une configuration de sphères, de plaquettes ou de fibres.

8. Corps céramique moulé selon la revendication 7, caractérisé en ce qu'il contient les éléments de renforcement et/ou fonctionnels dans une proportion entre 5 et 50% en volume.

9. Corps céramique moulé selon les revendications 7 ou 8, caractérisé en ce que les éléments de renforcement et/ou fonctionnels ont des dimensions entre 5 et $500\mu$.

10. Corps céramique moulé selon l'une des revendications 7 à 9, caractérisé en ce que les éléments de renforcement et/ou fonctionnels sont constitués par des oxydes, des carbures, des nitrures, des siliciures et/ou des borures.

11. Corps céramique moulé selon l'une des revendications précédentes, caractérisé en ce que l'aluminium est remplacé partiellement par un ou plusieurs métaux pulvérulents ou métalloïdes du groupe Co, Cr, Cu, Fe, Mg, Mn, Nb, Ni, Ta, V, Zn, Zr.

12. Corps céramique moulé selon la revendication 11, caractérisé en ce que jusqu'à 50% de l'aluminium est remplacé

13. Procédé pour la préparation d'un corps céramique moulé selon l'une des revendications 1 à 12, caractérisé en ce que l'on soumet un corps cru formé à partir du mélange finement dispersé d'Al, $Al_2O_3$ grossier et de matière à teneur Si dans une atmosphère contenant de l'oxygène à un traitement thermique.

14. Procédé selon la revendication 13, caractérisé en ce que l'on broie un mélange d'aluminium, $Al_2O_3$ et de matière à teneur Si et que l'on forme ensuite un corps cru à partir de celui-ci.

15. Procédé selon la revendication 4, caractérisé en ce que l'on broie au moins pendant une heure et en particulier pendant 1 jusqu'à 4 heures.

16. Procédé selon l'une des revendications 14 ou 15, caractérisé en ce que l'on broie l'Al et Si et/ou les composés à teneur Si avec de la poudre grossière d'$Al_2O_3$ dans un agent liquide.

17. Procédé selon la revendication 16, caractérisé en ce que la poudre $Al_2O_3$ a une grosseur entre 3 et 30$\mu$.

18. procédé selon l'une des revendications 14 à 17, caractérisé en ce qu'en temps que matière à teneur Si on ajoute SiC ou $Si_3N_4$ sous forme fine (< à 1$\mu$).

19. Procédé selon la revendication 16 ou 17, caractérisé en ce que la poudre grossière d'$Al_2O_3$ est partiellement remplacée par de la poudre SiC et/ou $Si_3N_4$ grossière.

20. Procédé selon la revendication 19, caractérisé en ce que $Al_2O_3$ grossier est totalement ou partiellement remplacé par $Al_2O_3$ fin, (< à 1$\mu$).

21. Procédé selon l'une des revendications précédentes caractérisé en ce que le traitement thermique s'effectue à une température entre 700 et 1700 ° C.

22. Procédé selon la revendication 21, caractérisé en que le corps creux est d'abord recuit par réaction à des températures entre environ 700 et 1300 ° C, puis fritté à environ 1300 jusqu'à 1700 ° C.

23. Procédé selon les revendications 13, 19 ou 20 caractérisé en ce que le traitement thermique s'effectue dans une atmosphère à teneur d'oxygène, atmosphère qui est humide ou/et qui est agitée ou/et constituée d'oxygène pur ou/et d'oxygène mélangé à l'argon et/ou à l'hélium.

24. Procédé selon la revendication 21 ou 22, caractérisé en ce que les conditions du traitement thermique sont choisies de telle manière à obtenir une porosité fine et ouverte définie.

25. Procédé selon l'une des revendications 13 à 24, caractérisé en ce que dans le corps céramique moulé obtenu, les pores sont infiltrés par un liquide sous vide ou sous pression.

26. Procédé selon la revendication 25, caractérisé en ce que l'on procède à l'infiltration d'une pression d'argon de 0.1 jusqu'à 100 MPA.

27. Procédé selon la revendication 25 ou 26, caractérisé en ce que le liquide est choisi à partir du groupe Al, alliage Al, alliage Si et/ou SiL.

28. procédé selon les revendications 18 à 27, caractérisé en ce que le coprs moulé est recuit dans une atmosphère d'oxygène ou d'azote pour le traitement de surface.

29. Utilisation d'un corps céramique moulé selon l'une des revendications 1 à 12 ou d'un corps céramique moulé préparé selon l'une des revendications 13 à 28 en tant que composant résistant à l'usure et aux températures élevées dans la construction des machines, appareils et moteurs.

30. Utilisation d'un corps céramique moulé selon l'une des revendications 1 à 12 ou d'un corps céramique moulé préparé selon l'une des revendications 13 à 28 en tant qu'outil de coupe comme élément de palier et/ou d'étanchéité.

31. Utilisation d'un corps céramique moulé selon l'une des revendications 1 à 12 ou d'un corps céramique moulé préparé selon l'une des revendications 13 à 28 en tant que partie fonctionnelle dans les appareils électroniques.

32. Corps céramique moulé selon l'une des revendications 1 à 12, caractérisé en ce que le mélange de poudre contient de plus du $ZrO_2$, qui, éventuellement est stabilisé.

# Fig.1

# Fig. 2